# EUROPÄISCHE PATENTSCHRIFT

(11) **EP 2 235 462 B1**
(45) Veröffentlichungstag und Bekanntmachung des Hinweises auf die Patenterteilung: **08.02.2012**
(21) Anmeldenummer: 08865927.1
(22) Anmeldetag: 18.12.2008
(51) Int. Cl.: F28C 1/00, C02F 1/50

(54) **KÜHLTURM MIT REDUZIERTER MIKROBIELLER KONTAMINATION**
COOLING TOWER HAVING REDUCED MICROBIAL CONTAMINATION
TOUR DE REFROIDISSEMENT À CONTAMINATION MICROBIENNE RÉDUITE

(30) Priorität: 21.12.2007 DE 102007061965
(43) Veröffentlichungstag der Anmeldung: 06.10.2010
(73) Patentinhaber: Guggenbichler, Joseph Peter, 6345 Kössen (AT)
(72) Erfinder: WERNER, H.-P., Goldegg 5622 (AT)
(74) Vertreter: Hofstetter, Alfons J.
(86) Internationale Anmeldenummer: PCT/EP2008/010841
(87) Internationale Veröffentlichungsnummer: WO 2009/083167

(56) Entgegenhaltungen:
- EP-A- 0 544 502
- EP-A- 1 857 418
- DE-A1- 10 128 129
- DE-U1-202006 018 695
- US-A- 4 867 944

## Beschreibung

Die Erfindung betrifft verbesserte Kühlturmeinbauten, bei denen die Kontamination mit Mikroorganismen verhindert werden kann. Die Erfindung betrifft ferner die Verbesserung des Wirkungsgrades der Kühltürme durch erweiterten konstruktiven Spielraum aufgrund von nicht vorhandenem Fouling.

Bei vielen großindustriellen Prozessen, insbesondere aber bei Kraftwerken, muss ein Teil der dabei erzeugten Wärme unmittelbar wieder an die Umgebung abgegeben werden. Man spricht hierbei auch von der sogenannten Abwärme.

Die einfachste Art der Wärmeabgabe ist die Frischwasser-Durchlaufkühlung. Bei diesem Verfahren wird die Abwärme direkt in Gewässer, wie Flüsse und Seen eingeleitet.

Dieses Verfahren wird jedoch bei Industrie- und Kraftwerkstandorten selten angewendet, da in den meisten Fällen die zulässige Erwärmung der Flüsse und Seen bereits erreicht ist. Dort und wo wasserreiche Gewässer nicht zur Verfügung stehen, muss die Abwärme unmittelbar an die Atmosphäre abgegeben werden. Dies geschieht mit Hilfe von Kühltürmen, welche als sogenannte "Naturzug"- oder als "Ventilatorkühltürme" betrieben werden können. Im ca. 100 - 170 m hohen "Kamin" eines Naturzugkühlturms saugt die erwärmte Luft allein durch ihren Auftrieb frische Kühlluft aus der Umgebung in den Kühlturm hinein, während die Luftströmung in den nur etwa 40 m hohen Ventilatorkühltürmen hauptsächlich durch saugende oder drückende Ventilatoren erzeugt wird.

Bei Kühltürmen unterscheidet man im Allgemeinen zwischen drei Varianten, wobei alle entweder als Naturzug- oder Ventilatorkühltürme betrieben werden können und eine vertikal angeordnete Kühlturmschale besitzen. Bei den drei Varianten handelt es sich um Trocken-, Nass- und Hybridkühltürme.

Bei Trockenkühltürmen wird die Wärme über Wärmeaustauscher durch Konvektion an die Luft abgegeben. Zur Unterstützung der Konvektion enthalten die Wärmeaustauscher Kühlrippen. Dieser Effekt wird verstärkt, wenn die Trockenkühltürme als Ventilatorkühltürme betrieben werden können.

Nasskühltürme verwenden zur Kühlung Wasser, das aus den umliegenden Gewässern gewonnen wird. Um die Abwärme abzuführen, wird das in einem Kondensator erwärmte Kühlwasser versprüht. Anschließend rieselt es in unmittelbarem Kontakt mit der Luft an Rieselplatten herunter, tropft von deren Unterkanten ab und wird im Kühlturmbecken, auch Kühlturmtasse genannt, aufgefangen.

Bei diesem Vorgang werden ungefähr ²/₃ der Kraftwerkswärme durch Verdunstung kleiner Kühlwassermengen und ¹/₃ durch Erwärmung der vorbeiströmenden Luft abgegeben. Die Befeuchtung und die Erwärmung der Luft führen zu einer Abnahme der Dichte und damit zu einer Zunahme des Auftriebes der Luft. Oberhalb des Kühlturmes wird das Gemisch als Dampfschwaden sichtbar.

Es gibt wiederum zwei Arten, wie ein solcher Nasskühlturm betrieben werden kann. Bei dem sogenannten "Kreislaufbetrieb" wird der rückgekühlte Wasserstrom zum Kondensator zurückgeführt, bei dem sogenannten "Ablaufbetrieb" wird er in das Gewässer eingeleitet, dem er entnommen wurde.

Bei Hybridkühltürmen vereinigen sich die technisch-physikalischen Vorteile von Trockenkühltürmen (Schwadenfreiheit) und Nasskühltürmen (hohe Kühlleistung, besserer Wirkungsgrad). Gegenüber Nasskühltürmen besitzen sie aber wegen des Leistungsbedarfs für die notwendigen Ventilatoren einen schlechteren Wirkungsgrad. Zudem liegen die Investitionen für Hybridkühltürme gleicher Leistung sehr viel höher. Somit wird den Nasskühltürmen häufiger der Vorzug gegeben.

Ein Problem, das sich beim Betreiben von Kühltürmen, insbesondere Nasskühltürmen ergibt, ist die Kontamination mit Mikroorganismen, auch Fouling genannt. Unter diesem Begriff versteht man die unerwünschte Ablagerung und Vermehrung der Mikroorganismen in einem System oder dessen Umgebung.

Mikroorganismen, wie Bakterien und Pilze sind in unserem Lebensraum allgegenwärtig und besiedeln Oberflächen unterschiedlichster Art. Viele Mikroorganismen sind Krankheitserreger und ihre Verbreitung bzw. Bekämpfung spielt daher eine große Rolle, da Mikroorganismen lebensbedrohliche Infektionen verursachen können.

So befinden sich auch in dem verwendeten Kühlwasser Mikroorganismen, die in den Kühlturm, insbesondere in das Kühlsystem, gelangen. In Kühltürmen herrschen Temperaturen von 30 bis 40°C, diese und die dort herrschenden Feuchtigkeitsverhältnisse fördern das mikrobielle Wachstum in den Kühltürmen. Somit kann es in Kühltürmen zu einer starken Vermehrung der sich im System befindlichen und abgelagerten Mikroorganismen kommen. Durch den Austritt der Luft oder des Kühlwassers gelangen die Mikroorganismen in die Umgebung und können so ein Umweltrisiko darstellen. Dies ist insbesondere bei Nasskühltürmen der Fall, wenn das verwendete Kühlwasser bereits einen hohen Anteil an Mikroorganismen und an Nährstoffen enthält, die Feuchtigkeitsverhältnisse innerhalb des Kühlturmes optimal sind und das so hochgradig verunreinigte Wasser unmittelbar in die Flussläufe gelangt, was zu einer großflächigen Verbreitung der Mikroorganismen führt.

Hinzu kommt, dass die sich ablagernden Mikroorganismen häufig Schleim bilden, was zur Verstopfung der sich in diesem System befindlichen Einbauten, wie Rohre, Rieselplatten, Filter, Tropfenabscheider und Sieben etc. führen kann, bzw. enge Zwischenräume in Einbauten nicht möglich sind, obwohl diese den thermischen Nutzen verbessern würden.

Eine ausführliche Darstellung der Problematik der Kontamination von Kühltürmen mit Mikroorganismen, insbesondere bei Nasskühltürmen, findet man in dem Forschungsbericht von VGB Technische Vereinigung der Großkraftswerksbetreiber "Mikrobielle Emission und Immission sowie Keimzahländerungen im Kühlwasser beim Betrieb von Nasskühltürmen", herausgegeben von der VGB Forschungsstiftung, 1979, J. Borneff, G. Ernst, H. P. Werner und D.Wurz.

In den vergangenen Jahren wurden die unterschiedlichsten Maßnahmen getroffen, um die Kontamination der Kühltürme mit Mikroorganismen zu verhindern.

So wurde versucht Kühlturmanlagen, insbesondere Rieselplatten, so zu konstruieren, dass die Ablagerung von Mikroorganismen erschwert und im optimalen Falle verhindert wird. Diese Ansätze waren jedoch zumeist nicht erfolgreich, und es konnte weiterhin ein nicht unerhebliches bakterielles Wachstum innerhalb des Kühlturms und damit eine nicht unerhebliche Kontamination der Umgebung festgestellt werden. Dies hat zur Folge, dass es notwendig ist die Kühltürme trotz der besonderen Konstruktion der Rieselplatten zu reinigen. Dies setzt jedoch voraus, dass das Kühlsystem und die entsprechenden Einbauten zugänglich sind, d.h. sie dürfen nicht zu eng innerhalb des Kühlturmes gepackt sein. Des weiteren müssen innerhalb des Kühlturmes zusätzliche Einbauten/Konstruktionen vorhanden sein, die den Zugang zu den zu reinigenden Einbauten ermöglichen. Diese zusätzlichen Einbauten führen aber dazu, dass zum einen weitere Ablagerungsflächen für Mikroorganismen geschaffen werden; zum anderen verhindern sie ein optimal gleichmäßiges Versprühen des Kühlwassers oder eine optimal gleichmäßige Kühlluftströmung, wie es bei Kühltürmen wünschenswert wäre. All diese notwendigen Maßnahmen führen dazu, dass der Wirkungsgrad der Kühlturme verschlechtert wird.

In Nasskühltürmen und in Hybridkühltürmen hat man die Möglichkeit, das verwendete Kühlwasser mit antimikrobiell wirksamen Substanzen, auch Biozide genannt, zu versetzen. Der Einsatz von hypochloriger oder hypobromiger Säure, wie z.B. in WO 90/15780 beschrieben, ist hierbei denkbar. Aber auch andere Biozide können verwendet werden, erwähnt sei hier nur 3-Isotiazolmikrobiozid. Gerade dieses Biozid hat aber den Nachteil, dass es nur eine schlechte Lagerstabilität aufweist. Daher wird der Einsatz von geeigneten Stabilisatoren notwendig, wie z.B. in EP 09 109 51 beschrieben.

Der Einsatz von Bioziden und Stabilisatoren führt aber dazu, dass diese und deren Abbauprodukte in das Kühlwasser und von hier in den Vorfluter, aber auch in die Luft gelangen, was wiederum große Umweltprobleme in sich birgt, da noch nicht verbrauchte Biozide, aber auch deren Abbauprodukte, Mikroorganismen, die für das ökologische Gleichgewicht der Gewässer verantwortlich sind, ebenfalls abtöten.

Daher wäre es wünschenswert, Kühltürme zur Verfügung zu stellen, bei denen der Einsatz von Bioziden nicht notwendig ist.

Vor allem bei Nasskühltürmen sind die darin befindlichen Tropfenabscheider und Rieseleinbauten, die aus Rohrleitungen, Düsen, Spritzteller, Rieselplatten und einer Stützkonstruktion bestehen, besonders von der Kontamination mit Mikroorganismen betroffen.

Eine Möglichkeit könnte darin bestehen, dass man diese Einbauten mit Substanzen, die eine anitmikrobielle Wirkung aufweisen, anstreicht oder beschichtet. Diese Möglichkeit ist bei Schiffen oder anderen leicht zugänglichen Anlagen wohl bekannt, wie z.B. in WO 96/038508 oder WO 00/50521 beschrieben, stellt aber keine wirkliche gute Alternative bei Kühltürmen dar, da ein solcher Anstrich, wie er bei Schiffen durchgeführt wird, im Bereich von Kühltürmen zu hohe Kosten verursachen würde. Durch die Bauweise der Kühltürme sind die Kühlsysteme und deren Einbauten nur sehr schwer zugänglich. Der technische Aufwand, der für einen solchen Anstrich betrieben werden müsste, wäre unrentabel.

Hohe Kosten würde auch der Einsatz von Nanosilber, wie es im Bereich des Gesundheits- und Hygienewesen häufig verwendet wird, verursachen. Dies ist zum einem durch den hohen Silberpreis bedingt, zum anderen muss das Silber zu Nanopartikeln verarbeitet werden, was sehr aufwendig und kostenintensiv ist. Ein weiteres Problem besteht darin, dass Nanosilber bei der Verarbeitung dazu neigt, Agglomerate, Aggregat oder Cluster zu bilden. Dadurch wird die aktive Oberfläche reduziert und in weiterer Folge auch die antimikrobielle Wirkung des Nanosilbers. Um dies zu verhindern, wird Nanosilber auf Partikeloberflächen eines Trägers, beispielsweise Titandioxid, abgeschieden, was wiederum die Herstellungskosten erhöht. Somit scheidet auch die Verwendung von Nanosilber in Kühltürmen und den darin befindlichen Einbauten gänzlich aus.

Eine weitere Möglichkeit den mikrobiellen Befall in Kühltürmen zu verhindern, wird in EP 0 544 502 beschrieben. Dort wird vorgeschlagen, Kupferoxid und/oder Zinkoxid in Form von Mischoxiden zu verwenden, die dann in entsprechende Kunststoffartikel eingearbeitet werden können.

Es ist bekannt, dass Kupfer- und Zinkionen eine antimikrobielle Wirkung haben. Aufgrund ihrer Preisgünstigkeit werden sie daher häufig bei der Bekämpfung von Mikroorganismen verwendet.

Wie sich jedoch gezeigt hat und in EP 0 544 502 ausführlich beschrieben wird führt die Einarbeitung von anorganischen Verbindungen aus Kupfer und/oder Zink in Kunststoffen dazu, dass, insbesondere in Harzen oder Kautschuk, die Wetterund Wärmebeständigkeit der entsprechenden Produkte verschlechtert wird. Außerdem ist bekannt, dass der Einsatz von diesen Verbindungen zu einer Zersetzung und Schaumbildung von Harzen und Kautschuken bei der Verarbeitungstemperatur der Harze und Kautschuk führen kann, was zu einer schlechten Verarbeitungsfähigkeit des Kunststoffes und zu einer Destabilisierung des Kunststoffproduktes führt.

Ein weiteres Problem ist, dass die verwendeten antimikrobiellen Substanzen nach der Verarbeitung in die entsprechenden Kunststoffe keine antimikrobielle Wirkung mehr zeigen oder zumindestens ihre Wirkung stark vermindert wird. Die Ursache hierfür ist, dass die Konzentration der Metallionen, die die eigentliche antimikrobielle Wirkung hervorrufen, kaum in dem Umfang in die zu behandelnden Systeme z.B. Kühlwasser gelangen, dass sie ihre Wirkung entfalten können.

Aus diesen Gründen wird in EP 0 544 502 vorgeschlagen Kupfer und Zink in Form von Mischmetallhydroxiden zu verwenden. Bei den vorgeschlagenen Mischmetallhydroxiden handelt es sich um eine feste Lösung bestehend aus Cu²⁺ und/oder Zn²⁺ als antimikrobiellen Bestandteil in Verbindung mit Ca(OH)₂ und Mg(OH)₂. Diese Mischmetallhydroxide ermöglichen es, dass aufgrund der verbesserten Löslichkeit genügend Kupfer- und/oder Zinkionen in das Wasser freigesetzt werden, und so eine antimikrobielle Wirkung erzielt werden kann.

Der Nachteil dieses Systems ist jedoch, dass das antimikrobielle Mittel aus dem Kunststoff herausgelöst werden muss, um seine Wirkung zu entfalten, und dabei folglich verbraucht wird. Dies führt dazu, dass die Anlagen regelmäßig auf ihren noch vorhandenen antimikrobiellen Schutz hin geprüft werden müssen. Des weiteren müssen Einbauten lediglich aufgrund dieses nicht mehr vorhandenen Schutzes erneuert werden, was wiederum zusätzliche Kosten verursacht.

Die DE 20 2006 018 695 U1 offenbart die Verwendung eines anorganischen Stoffes zur Vermeidung nosokomialer Infektionen, wobei der Stoff in Kontakt mit einem wässrigen Medium die Bildung von Wasserstoff-Kationen zur Erzielung einer antimikrobiellen Wirkung bewirkt. Ein Hinweis auf die Eignung des Stoffes für die Verwendung in Kühltürmen ist der DE 20 2006 O18 695 U1 nicht zu entnehmen.

Des weiteren besteht die Gefahr, dass nicht "verbrauchte" Metallionen oder unerwünschte Nebenprodukte, wie z.B. Kupfersulfat, über das Kühlwasser in die Gewässer gelangen und dort Mikroorganismen abtöten, die für das ökologische Gleichgewicht der Gewässer lebensnotwendig sind.

Somit war es Aufgabe der vorliegenden Erfindung, Kühltürme mit Einbauten zur Verfügung zu stellen, in denen ein Keimbewuchs verhindert wird, wobei der antimikrobielle Wirkstoff ein gutes Kosten-Nutzen-Verhältnis haben soll, nahezu nicht verbraucht wird, um umfangreiche Wartungs- und Instandhaltungsmaßnahmen ausschließen zu können, und kein Umweltrisiko darstellt.

Außerdem sollte eine zusätzliche Reinigung der Einbauten nicht mehr notwendig sein, damit man auf entsprechende dafür vorgesehene Einbauten und Konstruktionen verzichten und somit den Wirkungsgrad des Kühlturmes optimal ausnutzen kann.

Des weiteren sollte der antimikrobielle Wirkstoff in die Kühltürme, insbesondere in die darin vorhandenen Einbauten, einarbeitbar sein, um komplizierte und kostspielige Anstrich- oder Beschichtungsarbeiten zu vermeiden, wobei der Stoff durch das Einarbeiten seine antimikrobielle Wirkung nicht einbüßen darf bzw. diese vermindert wird. Außerdem darf die mechanische Beständigkeit durch den antimikrobiell wirksamen Stoff nicht verschlechtert werden.

Dieses vielfältige Aufgabenspektrum wird in der vorliegenden Erfindung dadurch gelöst, dass ein Kühlturm zur Verfügung gestellt wird, der ein Kühlsystem enthält, das mindestens einen Einbau aus mindestens einem Verbundwerkstoff und/oder mindestens einem Werkstoffverbund und einem Stoff, der in Kontakt mit einem wässrigen Medium die Bildung von Wasserstoff-Kationen bewirkt und Molybdän und/oder Wolfram enthält, aufweist.

Es hat sich gezeigt, dass bei den in Kühltürmen herrschenden Verhältnisse, insbesondere den Temperatur- und Feuchtigkeitsverhältnissen, die Wirksamkeit von Molybdän und/oder Wolfram enthaltenden Stoffen mit antimikrobieller Wirkung stark erhöht ist.

Dieser Effekt war so nicht zu erwarten, da bei bekannten antimikrobiell wirksamen Stoffen immer eine Verschlechterung der antimikrobiellen Wirkung zu beobachten war, wenn diese in Einbauten oder Produkte eingearbeitet und unter Kühlturmbedingungen getestet wurden. Im günstigsten Fall blieb die antimikrobielle Wirksamkeit des Stoffes unverändert.

Insbesondere konnte in Testreihen gezeigt werden, dass im Vergleich zu Systemen, die Kupfer enthalten, Proben, die Molybdän und/oder Wolfram enthalten, eine 100-fach größere antimikrobielle Wirksamkeit bei den in Kühltürmen vorherrschenden Bedingungen aufweisen. Außerdem konnte nachgewiesen werden, dass sich diese Stoffe im Gegensatz z.B. zu Substanzen, die Kupfer enthalten, nahezu nicht verbrauchen, und somit eine zeitlich uneingeschränkte Verwendung der Stoffe möglich ist.

Des Weiteren konnte auch gezeigt werden, dass es nicht zur Bildung von unerwünschten Molybdän- und/oder Wolframnebenprodukten kommt, die dann über das Kühlwasser in die Abwässer gelangen könnten, wie es bei Kupfer, das zur Bildung von Kupfersulfat (CuSO₄) neigt, der Fall ist.

Es hat sich außerdem gezeigt, dass weder durch Wolfram, noch Molybdän bzw. deren Verbindungen oder eine Kombination aus beiden die Stabilität und Wetterbeständigkeit der Einbauten beeinträchtigt wird.

Bei dem Kühlsystem kann es sich um ein Luft- oder Kühlwassersystem oder eine Mischung daraus handeln. Bevorzugt ist ein Kühlwassersystem.

Mindestens ein Einbau des erfindungsgemäßen Kühlturms enthält den antimikrobiell wirksamen Stoff.

Wie bereits erwähnt ist die Gefahr der Kontamination und Vermehrung von Mikroorganismen bei Einbauten wie Tropfenabscheider und Rieseleinbauten in Nasskühltürmen besonders groß. Es ist daher bevorzugt, dass der Tropfenabscheider und/oder der Rieseleinbau, wie er üblicherweise in Nasskühltürmen verwendet wird, den antimikrobiell wirksamen Stoff enthält.

Üblicherweise bestehen Rieseleinbauten aus Düsen, Spritzteller, mehreren Rieselplatten und einer Stützkonstruktion. Es ist in der vorliegenden Erfindung bevorzugt, dass mindestens eine Komponente des Rieseleinbaus den antimikrobielle wirksamen Stoff enthält, besonders bevorzugt ist es, wenn es sich bei der Komponente um einen Spritzteller und/oder Rieselplatten handelt.

Der Spritzteller besteht dabei bevorzugt aus mehren gitterförmigen Platten, die im Spritzgussverfahren hergestellt werden und so zu einer Schicht angeordnet sind, dass sie den Teller bilden.

Die Rieseleinbauten enthalten mehrere nebeneinander angeordnete Rieselplatten.

Rieselplatten, wie sie üblicherweise in Nasskühltürmen verwendet werden, bestehen wiederum aus mehren Schichten, bevorzugt aus 5 bis 20 Schichten, besonders bevorzugt aus 8 bis 15 Schichten.

Jede Schicht hat in der Regel eine Schichtdicke von 1,00 bis 2,5 mm, bevorzugt ist eine Schichtdicke von 1,5 bis 2,0 mm.

Jede Schicht wird aus Fasern gebildet, die gitterartig miteinander verwoben sind. Die Kanäle der gitterartigen Schicht haben einen bevorzugten Durchmesser von 10 bis 30 mm, bevorzugt ist ferner ein Durchmesser von 15 bis 25 mm.

Die Schichten werden zusammengeschweißt oder geklebt und bilden so die Rieseleinbauten.

Die Einbauten des erfindungsgemäßen Kühlturms werden aus Verbundwerkstoffen und/oder Werkstoffverbünden hergestellt.

Unter einem Verbundwerkstoff versteht man einen Werkstoff aus zwei oder mehr verbundenen Materialien. Der Verbundwerkstoff besitzt andere Werkstoffeigenschaften als seine einzelnen Komponenten. Für die Eigenschaften der Verbundwerkstoffe sind stoffliche Eigenschaften und Geometrie der Komponenten von Bedeutung. Insbesondere spielen oft Größeneffekte eine Rolle. Die Verbindung erfolgt durch Stoff- oder Formschluss oder eine Kombination von beidem. Die Komponenten eines Verbundwerkstoffs können dabei selbst wieder Verbundwerkstoffe sein. Bei Teilchen- und Faserverbundwerkstoffen sind Teilchen bzw. Fasern in eine andere Komponente des Verbundwerkstoffes, der so genannten Matrix eingebettet. In Faserverbundwerkstoffen können die Fasern in einer oder mehreren bestimmten Richtungen verlaufen bzw. Vorzugsrichtungen haben. Faserverbundwerkstoffe können schichtweise hergestellt werden, sind dadurch aber noch keine Schichtverbundwerkstoffe, wenn die aufeinanderfolgenden Schichten gleichartig sind. Der Begriff Laminat wird hier allerdings auch verwendet. Schichtverbundwerkstoffe bestehen aus aufeinanderliegenden Schichten unterschiedlicher Anzahl. Bei Durchdringungsverbundwerkstoffen bilden die einzelnen Komponenten für sich jeweils zusammenhängende offenporige Materialien. Sie werden zum Beispiel durch Tränken eines offenporigen gesinterten Werkstoffs (z.B. einer Schaumkeramik) mit einem geschmolzenen zweiten Stoff hergestellt.

In der vorliegenden Erfindung können alle Arten von Verbundwerkstoffen für die Einbauten verwendet werden, wie z.B. Metall, Keramik oder Kunststoff, aber auch alle anderen handelsüblichen Materialien sind denkbar. Bevorzugt ist, dass der antimikrobiell wirksame Stoff in den Verbundwerkstoff inkorporiert wird und somit der Verbundwerkstoff sowohl einen der oben genannten Werkstoffe und den antimikrobiell wirksamen Stoff enthält.

Denkbar ist aber auch die Verwendung von sogenannten Werkstoffverbünden.

Der Werkstoffverbund besteht ebenfalls aus Komponenten unterschiedlicher Materialien mit unterschiedlichen Eigenschaftsprofilen, die zu einem Bauteil mit neuem Eigenschaftsprofil mit Hilfe einer werkstoffgerechten Fügetechnik kombiniert werden. In diesem Verbund liegen die einzelnen verwendeten Materialien zumeist in Schichten vor.

In der vorliegenden Erfindung kann eine Materialkomponente eines solchen Werkstoffverbundes der antimikrobiell wirksame Stoff selber sein, der im Verbund als Schicht vorliegt. Dieser bildet dann mit einem sogenannten Substratwerkstoff, wie z.B. Metall, Keramik und/oder Kunststoff, den Werkstoffverbund.

Des Weiteren ist in der vorliegenden Erfindung bevorzugt, dass mindestens eine Komponente des Verbundwerkstoffes und/oder Werkstoffverbundes eine Polymermatrix enthält.

Diese Polymermatrix kann aus den handelsüblichen Polymeren bestehen. Handelsübliche Polymer sind z.B. thermoplastische Harze wie Polyethylen und dessen Copolymere, Polypropylen und entsprechende Copolymere, Polyvinylchlorid, Polystyrol, Polyester, Polyether, Polyamid, Duroplastharze wie Phenolharze, Melaminharze, Epoxidharze, Kautschuk etc.

Besonders bevorzugt ist es wenn die Polymermatrix aus Polyvinylchorid, Polypropylen oder eine Mischung daraus besteht.

Des weiteren ist bevorzugt, wenn es sich bei dem verwendeten Polypropylen um ein Polypropylen handelt ausgewählt aus der Gruppe enthaltend Propylen-Homopolymer, Copolymer aus Polypropylen und 0,1 bis 25wt% Ethylen, Mischungen aus Propylen-Homopolymer oder Copolymer mit HDPE, LDPE, LLDPE, und/oder EPR, Mischungen aus Polypropylen mit thermoplastischen Polymeren wie Polyamid, Polyester. Der Anteil der zum Polypropylen zugemischten Komponente sollte in den Mischungen zwischen 0,1 bis 40wt% betragen.

Des weiteren ist bevorzugt wenn das Polypropylen verzweigt ist. Bevorzugt ist dabei ein verzweigtes Polypropylen wie es gemäß WO 00/00520 hergestellt wird.

Außerdem ist bevorzugt, wenn die Polymermatrix neben dem Polymer zusätzlich anorganische Füllstoffe wie z.B. Talk enthält.

In der vorliegenden Erfindung ist es bevorzugt, wenn der verwendete Tropfenabscheider und/oder die Rieselplatten aus einem Verbundwerkstoff hergestellt werden, der die oben beschriebene Polymermatrix und den antimikrobiell wirksamen Stoff enthält oder daraus besteht.

Der antimikrobiell wirksame Stoff wiederum enthält Molybdän und/oder Wolfram.

Während bei den bis dato verfügbaren anorganischen Wirkstoffen der olygodynamische Effekt, d.h. die schädigende Wirkung von Metall-Kationen auf lebende Zellen genützt wird, wird bei der vorliegenden Erfindung die Bildung von Wasserstoff-Kationen, die eine Absenkung des pH-Werts in dem mit dem Stoff in Kontakt stehenden Medium bewirken, genutzt. Freie Protonen lagern sich dabei, auf Grund ihres sehr kleinen Radius, sofort an ein Wassermolekül unter Bildung von Oxoniumionen (H₃O⁺) an. Sofern die Konzentrationsverhältnisse es erlauben, kommt es zu Verknüpfungen der Oxoniumionen mit mehreren Wassermolekülen. Es werden daher als Wasserstoff-Kationen neben H⁺ auch die durch Reaktion des H⁺ mit Wasser gebildeten Kationen, sowie deren Hydrate bezeichnet. Neben dem Oxoniumion (H₃O⁺) sind dies das Zundelkation (H₅O₂⁺) und das Eigenkation (H₉O₄⁺).

So reagiert beispielsweise Molybdänoxid mit Wasser zu Molybdänsäure (H₂MoO₄), die sich wiederum mit H₂O zu H₃O⁺ und MoO₄⁻ oder MoO₄²⁻ umsetzt. Auch Wolframoxid bildet mit H₂O Wolframsäure (H₂WO₄), die sich mit H₂O zu H₃O⁺ und WO₄⁻ oder WO₄²⁻ umsetzt. Nach Arrhenius ist das Wasserstoffkation Träger der sauren Eigenschaften. Der pH-Wert ist der negativ dekadische Logarithmus des Zahlenwertes der Wasserstoffionen-Konzentration in Mol / Liter. Für eine reine neutrale Lösung von Wasser weisen die Wasserstoffionen und die OH⁻ (Hydroxid) Ionen den gleichen Wert auf (10⁻⁷ Mol/l) und der pH-Wert beträgt 7. Bildet nun ein Stoff in Kontakt mit einem wässrigen Medium Wasserstoffkationen, so kommt es zu einer Erhöhung des Wasserstoffkationen-Wertes und damit wird das wässrige Medium sauer.

Es hat sich nun gezeigt, dass in Kontakt mit einem wässrigen Medium Wasserstoff-Kationen bildende Stoffe eine ausgezeichnete antimikrobielle Wirksamkeit aufweisen.

Dieser Effekt tritt bereits bei Kühltürmen durch die in der Kühlluft enthaltene Luftfeuchtigkeit auf. Verstärkt ist er jedoch in Kühltürmsystemen zu beobachten, die mit Kühlwasser arbeiten.

Der vorliegenden Erfindung liegt also der erfindungsgemäße Gedanke zu Grunde, die Schleimbildung vollständig durch nicht eluierbare saure Oberflächen zu verhindern. Es hat sich außerdem gezeigt, dass eine Temperatur von 30 bis 40 °C und eine Luftfeuchtigkeit von 80 bis 100 % in der Umgebung für die Wirksamkeit des verwendeten Stoffes von Vorteil ist.

Durch die Bildung von Wasserstoffkationen kommt es in der Regel zu einer Absenkung des pH-Wertes von < 6, bevorzugt ist ein pH-Wert < 5.

Ein wesentlicher Vorteil der vorliegenden Erfindung liegt also darin, dass sich der antimikrobielle Stoff praktisch nicht verbraucht. Dies ist insbesondere dann der Fall, wenn der Stoff eine geringe Löslichkeit im wässrigen Medium aufweist, wie es bei Molybdän und/oder Wolfram bzw. Verbindungen daraus, der Fall ist.

Bevorzugt liegt dabei die Löslichkeit bei kleiner 0,1 Mol / Liter. Die Löslichkeit von Molybdän- und Wolframoxid liegt bei kleiner 0,02 Mol / Liter. Der antimikrobielle Effekt ist daher zeitlich nahezu unbeschränkt vorhanden.

Somit wird vermieden, dass die Einbauten, die den antimikrobiell wirksamen Stoff enthalten, aufgrund des Verlustes des antimikorbiellen Schutzes erneuert werden müssen. Die erfindungsgemäßen Kühltürme können einfacher gewartet und instand gehalten werden. Zusätzliche Kosten entstehen hierbei nicht. Des weiteren gelangt der antimikrobiell wirksame Stoff auch nicht in die Gewässer, so dass aus umweltschutzrechtlicher Sicht die vorliegende Erfindung unbedenklich ist.

Durch die hohe Effektivität und die verbesserte Wartungsfreundlichkeit werden zusätzliche Einbauten/Konstruktionen für Reinigung und Wartung unnötig. Daher können aber auch die Einbauten für das Kühlsystem enger innerhalb des Kühlturmes gepackt werden, was den Wirkungsgrad des Kühlturmes bei gleichem Kühlvolumen erhöht.

Es hat sich außerdem gezeigt, dass es in der vorliegenden Erfindung bevorzugt ist, wenn die Molybdän- und Wolfram-haltigen Werkstoffe oberflächlich oxidiert sind oder in oxidischer Form vorliegen.

Bei der Charakterisierung der antimikrobiellen Wirksamkeit wurde auf eine Methode zurückgegriffen, die in folgenden Fachaufsätzen im Detail beschrieben ist:
Fremdkörper-assoziierte Infektionen in der Intensivmedizin - Therapie und Prävention, J.P. Guggenbichler, Antibiotika Monitor 20 (3), 2004, S. 52 - 64
Inzidenz und Prävention Fremdkörper-assiozierter Infektionen, J.P. Guggenbichler, Biomaterialien 5 (4) 2004, S 228 - 236.

Insbesondere die dort beschriebene Methode der Ausrollkultur hat sich zur Untersuchung der antimikrobiellen Wirkung gut bewährt. Dabei wird eine Wirkstoffprobe für eine bestimmte Zeit, beispielsweise 3 Stunden, in eine Keimsuspension gegeben. Es kommt zum oberflächlichen Anwachsen von Keimen. Nach dieser Zeit werden die Proben über eine so genannte Agarplatte gerollt und in eine sterile physiologische Kochsalzlösung gegeben. Dieser Vorgang wird mehrmals alle 3 Stunden wiederholt. Diese wiederholte Abrolltätigkeit in 3-stündigem Abstand gibt Aufschluss, ob und mit welchem Effizienzgrad eine keimreduzierende oder keimtötende Wirkung eintritt. Diese Methode lässt sich für die Untersuchung verschiedener Bakterien anwenden, wie z.B. Pseudomonas aeroginosa, Escherichia coli oder Staphylococcus aureus.

Die besten Ergebnisse konnten mit Stoffen erreicht werden, die Molybdän und Wolfram enthalten. Es ist dabei bevorzugt, dass im Grenzbereich zwischen dem Molybdän- oder Wolfram-basierenden Wirkstoff Molybdänoxid oder Wolframoxid entsteht.

In den verwendeten Verbundwerkstoffen bzw. Werkstoffverbünden kann durch thermische Voroxidation bei Temperaturen vorteilhafterweise von größer 300°C eine antimikrobielle Wirksamkeit eingestellt werden. Die Voroxidation kann auch chemisch oder elektrochemisch durchgeführt werden. Diese Voroxidation ist bei massiven Mo- und W- Proben erforderlich. Es hat sich dabei gezeigt, dass, vergleichsweise zu einem in situ gebildeten Oxidfilm, ein durch eine Glühbehandlung voroxidiertes Material antimikrobiell wirksamer ist. Eine Voroxidation ist insbesondere dann durchzuführen, wenn die Einsatzbedingungen keine hinreichende Oxidation auslösen. Entscheidend dabei ist weiteres, dass der Oxidfilm eine große spezifische Oberfläche aufweist.

Neben Reinmolybdän und Reinwolfram sind auch die Verbindungen und Legierungen dieser Stoffe wirksam, die hinreichend stabil sind und oberflächlich einen Oxidfilm ausbilden. Zu den Molybdänverbindungen, die eine antimikrobielle Wirksamkeit aufweisen, zählen neben den Oxiden, Molybdänkarbid, Molybdännitrid, Molybdänsilizid und Molybdänsulfid. Besonders bevorzugt ist die Verwendung von Molybdänoxid wie MO₂ oder MO₃, insbesondere bevorzugt ist die Verwendung von MO₃.

Molybdän, Molybdänoxid und die zuvor genannten Stoffe sind kommerziell auch in sehr feiner Form mit Partikelgrößen nach Fisher von < 1 µm erhältlich. Diese Legierungen bilden an der Oberfläche einen antimikrobiell wirksamen Oxidfilm aus.

Im Falle von Wolfram sind ebenfalls Wolframwerkstoffe wirksam, die in situ oder durch eine vorhergehende Glühung einen Oxidfilm ausbilden. Neben oxidiertem Reinwolfram sind die Oxide des Wolframs wirksam. Hier seien besonders Wolframblauoxid (WO_{2,84}) und WO₃ erwähnt. Von den möglichen Wolframverbindungen, die an der Oberfläche einen Oxidfilm ausbilden, eignen sich insbesondere Wolframkarbid, Wolframsilizid und Wolframsulfid.

Der beschriebene antimikrobiell wirksame Stoff kann mit dem für die Polymermatrix verwendeten Polymer zusammengemischt werden und dann gemeinsam mit dem Polymer zur Polymermatrix zu dem entsprechenden Einbau extrudiert werden oder aber als Schicht vorliegen und zusammen mit der Polymermatrix den Verbundwerkstoff bilden.

Dabei ist bevorzugt, wenn die Schicht teilweise oxidiert ist. Besonders bevorzugt ist es, wenn die Schicht aus Mo-Oxid und/oder W-Oxid besteht, vor allem bevorzugt ist es, wenn diese aus Mo und Mo-Oxid oder W und W-Oxid besteht, insbesondere bevorzugt ist es, wenn die Schicht aus MO₃ besteht.

Diese Schicht selber kann kompakt oder porös sein. Besonders gute Resultate lassen sich erzielen, wenn die Schicht eine spongiöse, porige Struktur mit einer Porengröße von 50 bis 900 µm aufweist. Solche porigen Strukturen lassen sich beispielsweise erzeugen, indem der antimikrobiell wirksame Stoff in Form eines Slurrys oder aus der Gasphase mit optionaler anschließender Glühung abgeschieden wird. Eine große Oberfläche kann auch erzielt werden, wenn die Schicht in Form inselartiger, im Wesentlichen nicht zusammenhängender, Agglomerate vorliegt. Besonders vorteilhaft ist es, wenn diese inselartigen Agglomerate die Oberfläche des Substratwerkstoffs zu 40 bis 90 % bedecken.

Wie sich gezeigt hat ist es bevorzugt, wenn sehr feinkörniges Pulver verwendet wird, d.h. dass die Partikelgröße sollte nach Fisher < 5 µm betragen, stärker bevorzugt ist kleiner 1 µm.

Es ist des weiteren bevorzugt, wenn der oben beschriebene Stoff im Verbundwerkstoff und/oder Werstoffverbund, mit einem Anteil von 0,1 bis 50 Vol.% vorkommt, insbesondere bevorzugt ist ein Anteil von 3 bis 15 Vol.%.

Somit stellt die vorliegende Erfindung einen Kühlturm zur Verfügung, bei dem die Gefahr der Kontamination mit Mikroorganismen, d.h. deren Ablagerung und Vermehrung im System, nicht mehr besteht. Die Verwendung des beschriebenen Stoffes zeigt ein besonders gutes Kosten-Nutzen-Verhältnis. Wartungs- und Instandhaltungsmaßnahmen bezüglich des antimikrobiellen Schutzes sind nicht nötig.

Im Folgenden soll an Hand von TEM-Aufnahmen und den dargelegten Testreihen noch einmal die besonders gute antimikrobielle Wirksamkeit des Stoffes demonstriert werden.
- Figur 1 a-f:: Verschiedene TEM-Aufnahmen einer Kunststoffprobe, die MO₃ enthielten und 6 h in 10⁹ CFU / ml Pseudomonas aeruginosa inkubiert wurden. Es konnte zu keinem Zeitpunkt eine Kontamination der Probe mit Mikroorganismen nachgewiesen werden.

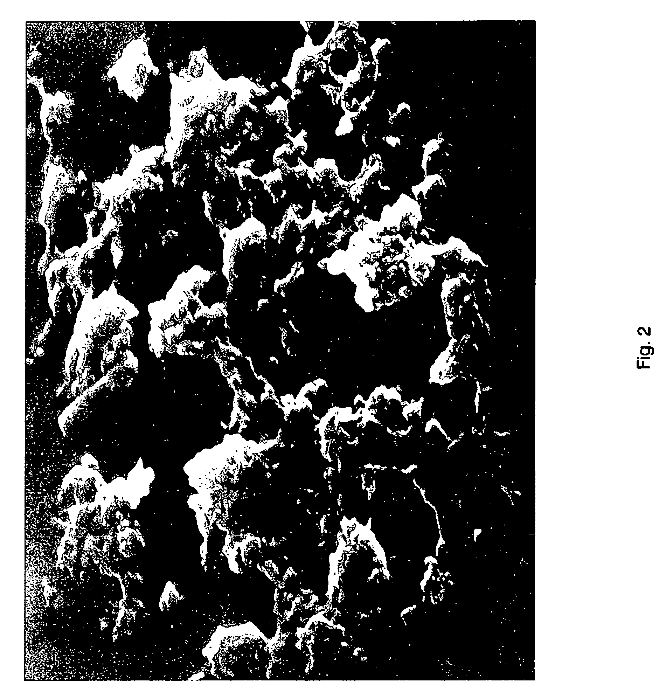

- Figur 2:: TEM-Aufnahme einer Kunststoffprobe, die keine antimikrobiell wirksame Substanz enthielt und mit 10⁷ CFU / ml Pseudomonas aeruginosa 3 h inkubiert wurde. Es ist eindeutig, ein starker Befall der Probe mit Pseudomonas aeruginosa zu beobachten.

### Testreihen

In den Testreihen wurde die antimikrobielle Wirksamkeit von MO₃ im Vergleich zu Kupfer getestet.

Dabei wurde ein Verbundwerkstoff für die Probe verwendet, der eine Polymermatrix aus Polypropylen enthielt.

Zur Untersuchung der antimikrobiellen Wirksamkeit wurde die bereits beschriebene Ausrollkultur verwendet.

Die Probe wurde 6 h lang in 10⁹ CFU/ml Pseudomonas aeruginosa inkubiert.

Die Inkubationtemperatur betrug 37 °C und es herrschte eine Luftfeuchtigkeit von ca. 100%, was den Bedingungen, wie sie in Kühltürmen vorkommen, entspricht.

Bei den "Kupfer-Proben" wurde zunächst das Wachstum und die Vermehrung von Pseudomonas aeruginosa verhindert, was zu erwarten war. Die antimikrobielle Wirksamkeit der Proben nahm jedoch nach einigen Stunden ab, und es kam zu einem Anstieg der Keimzahl. Außerdem konnte an der Oberfläche des verwendeten Verbundwerkstoffs die Bildung von Kupfersulfat (CuSO₄) nachgewiesen werden. Dieses Phänomen ist nur dadurch zu erklären, dass im Laufe der Zeit das vorhandene Kupfer in den Proben verbraucht wird und somit die antimikrobielle Wirkung verloren geht.

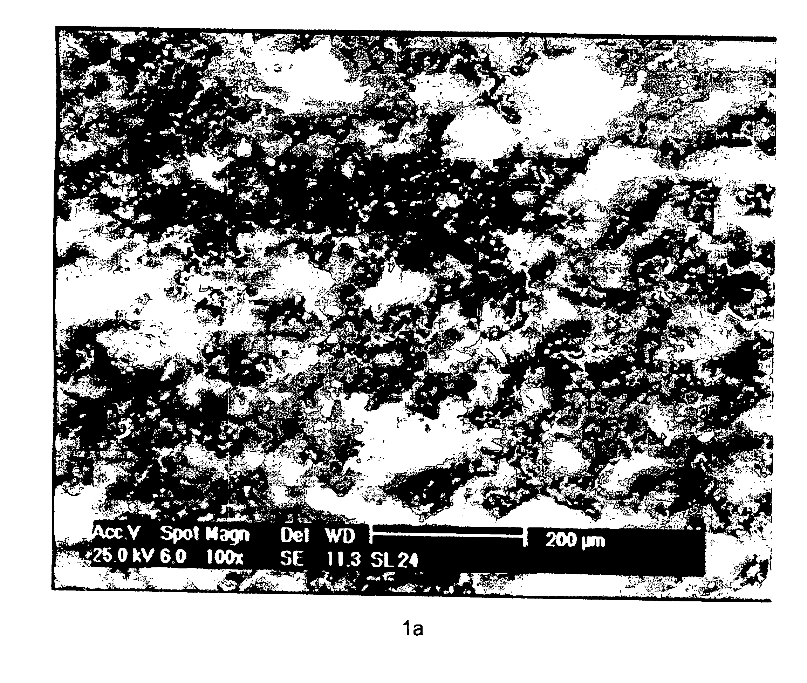

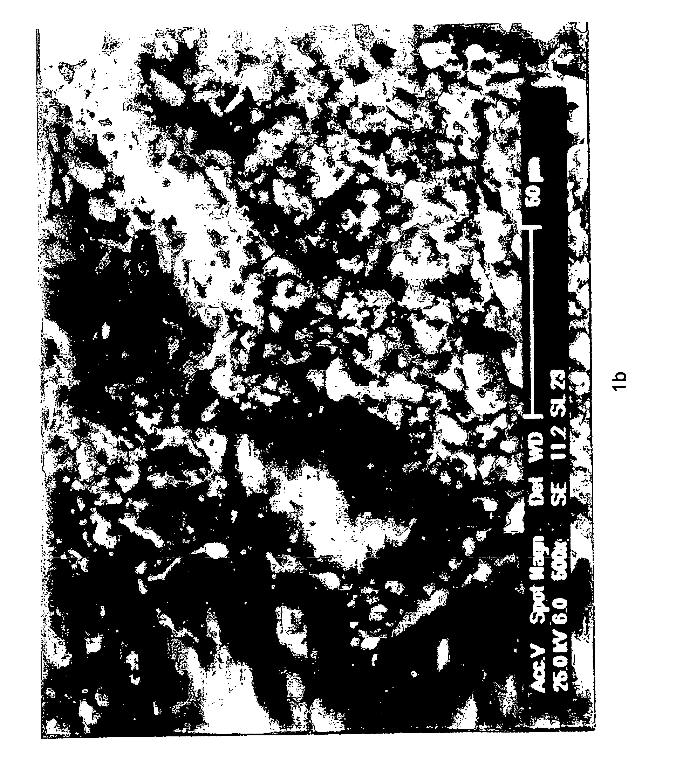

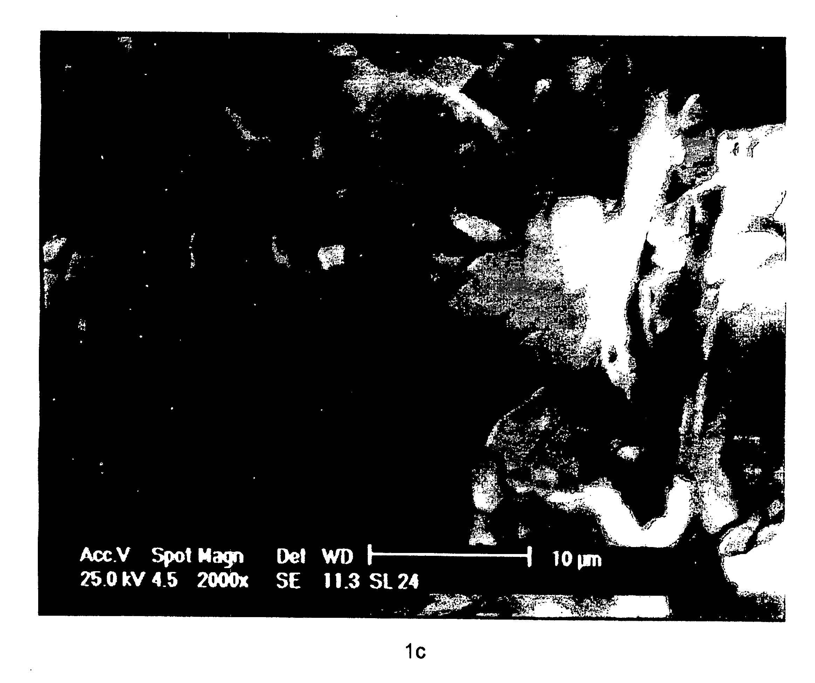

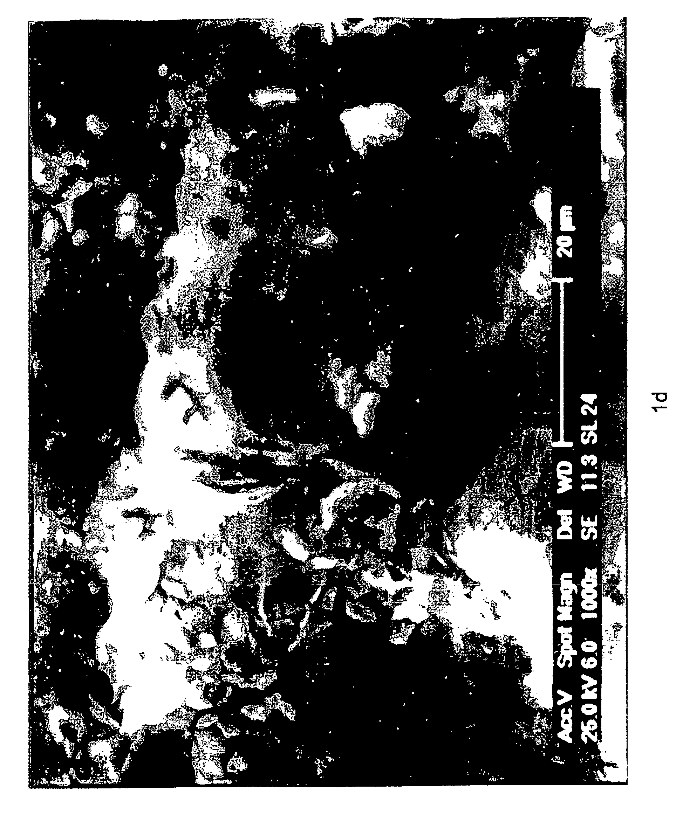

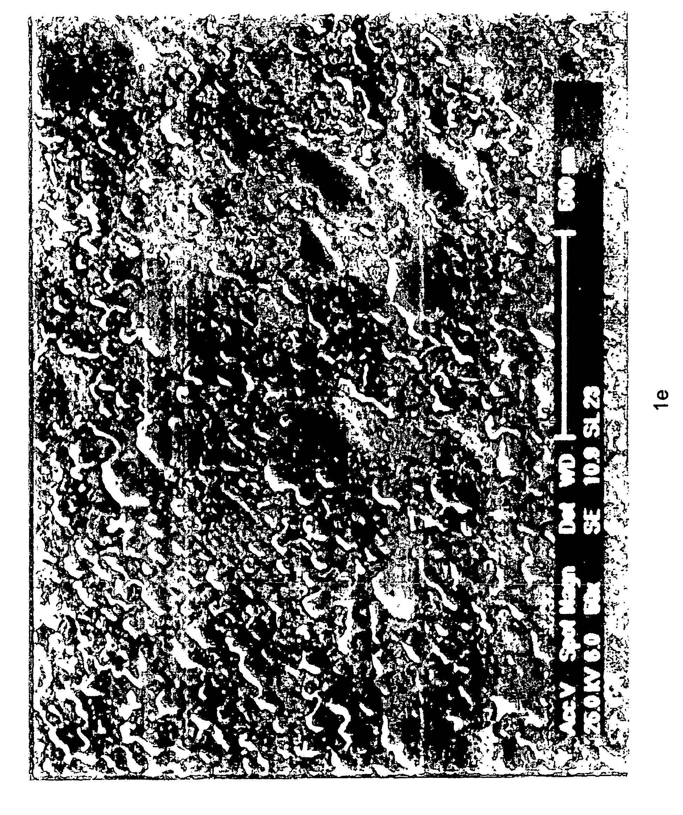

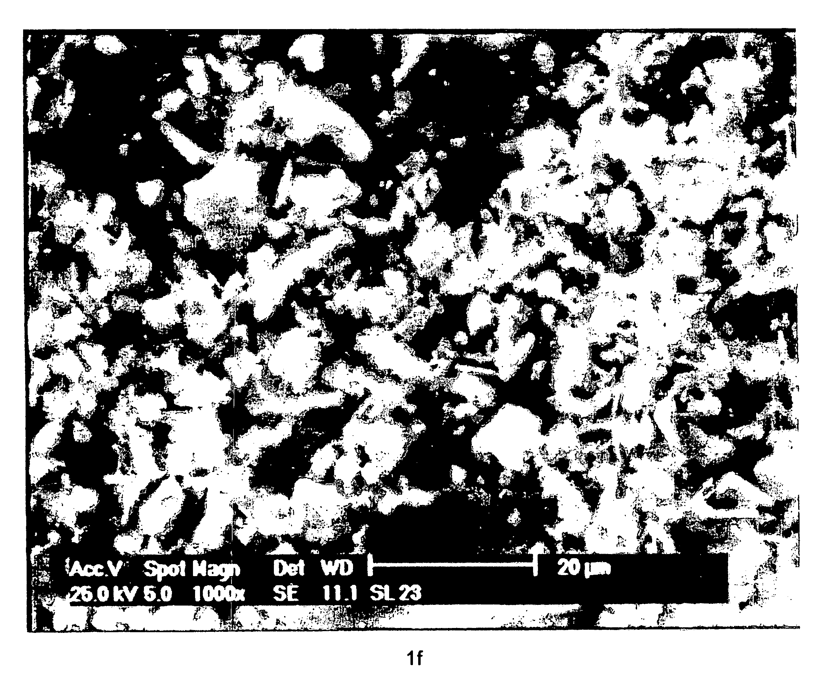

Die in Figur 1 a-f abgebildeten TEM-Aufnahmen zeigen, dass die antimikrobielle Wirkung bei den Proben, die WO₃ enthalten, permanent vorhanden ist. Des Weiteren wurde auch keine Abnahme der Wirkung, wie es bei den "Kupfer-Proben" der Fall war, beobachtet.

Somit konnte nachgewiesen werden, dass der erfindungsgemäße Stoff eine sehr gute antimikrobielle Wirkung bei Bedingungen, wie sie in Kühltürmen vorherrschen, zeigt und diese darüber hinaus zeitlich unbeschränkt ist.

## Patentansprüche

1. Kühlturm enthaltend ein Kühlsystem, wobei das Kühlsystem mindestens einen Einbau aus mindestens einem Verbundwerkstoff und/oder mindestens einem Werkstoffverbund und einem Stoff, der in Kontakt mit einem wässrigen Medium die Bildung von Wasserstoff-Kationen bewirkt und Molybdän und/oder Wolfram enthält, aufweist.

2. Kühlturm nach Anspruch 1, wobei es sich bei dem Kühlsystem um ein Kühlwassersystem handelt.

3. Kühlturm nach Anspruch 2, wobei der Einbau ein Tropfenabscheider und/oder ein Rieseleinbau ist.

4. Kühlturm nach einem der Ansprüche 1 bis 3, wobei mindestens eine Komponente des Verbundwerkstoffs und/oder des Werkstoffverbundes eine Polymermatrix enthält.

5. Kühlturm nach Anspruch 4, wobei die Polymermatrix Polypropylen enthält.

6. Kühlturm nach den Ansprüchen 4 oder 5, wobei der Stoff in die Polymermatrix inkorporiert ist.

7. Kühlturm nach einem der Ansprüche 2 bis 6, wobei die Löslichkeit des Stoffes im Kühlwasser kleiner 0,1.Mol/Liter beträgt.

8. Kühlturm nach einem der Ansprüche 1 bis 7, wobei der Stoff Mo-Oxid, insbesondere MoO₂ und/oder MoO₃, oder W-Oxid, insbesondere Wolfram-Blauoxid und/oder WO₃ ist.

9. Kühlturm nach einem der Ansprüche 1 bis 7, wobei der Stoff Molybdän, eine Molybdänlegierung und/oder eine Molybdänverbindung ist, wobei die Oberfläche eine Mo-Oxidschicht aufweist, oder wobei der Stoff Wolfram, eine Wolframlegierung und/oder eine Wolframverbindung ist, wobei die Oberfläche eine Wolfram-Oxidschicht aufweist.

10. Kühlturm nach Anspruch 9, wobei die Molybdänverbindung Molybdänkarbid, Molybdännitrid, Molybdänsilizid und/oder Molybdänsulfid ist oder wobei die Wolframverbindung Wolframkarbid, Wolframnitrid, Wolframsilizid und/oder Wolframsulfid ist.

11. Kühlturm nach einem der Ansprüche 1 bis 10, wobei der Stoff als Bestandteil einer Schicht vorliegt.

12. Kühlturm nach Anspruch 11, wobei die Schicht aus Mo-Oxid und/oder aus W-Oxid oder aus Mo und Mo-Oxid oder aus W und W-Oxid besteht.

13. Kühlturm nach Anspruch 12, wobei die Schicht aus MoO₃ besteht.

14. Kühlturm nach Anspruch 1 bis 13, wobei der Stoff eine Partikelgröße nach Fisher < 5 µm aufweist.

15. Kühlturm nach einem der Ansprüche 1 bis 14, wobei der Massegehalt des Stoffes im Verbundwerkstoffund/oder Werkstoffverbund 0,1 bis 50 Vol.%, bevorzugt 3 bis 15 Vol.%, beträgt.

## Claims

1. Cooling tower including a cooling system, wherein the cooling system has at least one installation of at least one composite material and/or at least one material combination and a substance causing the formation of hydrogen cations in contact with an aqueous medium and containing molybdenum and/or tungsten.

2. Cooling tower according to claim 1, wherein the cooling system is a cooling water system.

3. Cooling tower according to claim 2, wherein the installation is a droplet separator and/or a flow installation.

4. Cooling tower according to any one of claims 1 to 3, wherein at least one component of the composite material and/or of the material combination contains a polymer matrix.

5. Cooling tower according to claim 4, wherein the polymer matrix contains polypropylene.

6. Cooling tower according to claims 4 or 5, wherein the substance is incorporated in the polymer matrix.

7. Cooling tower according to any one of claims 2 to 6, wherein the solubility of the substance in the cooling water is smaller than 0.1 moles/liter.

8. Cooling tower according to any one of claims 1 to 7, wherein the substance is Mo oxide, in particular MoO₂ and/or MoO₃, or W oxide, in particular tungsten blue oxide and/or WO₃.

9. Cooling tower according to any one of claims 1 to 7, wherein the substance is molybdenum, a molybderium alloy and/or a molybdenum compound, wherein the surface has a Mo oxide layer, or wherein the substance is tungsten, a tungsten alloy and/or a tungsten compound, wherein the surface has a tungsten oxide layer.

10. Cooling tower according to claim 9, wherein the molybdenum compound is molybdenum carbide, molybdenum nitride, molybdenum silicide and/or molybdenum sulfide, or wherein the tungsten compound is tungsten carbide, tungsten nitride, tungsten silicide and/or tungsten sulfide.

11. Cooling tower according to any one of claims 1 to 10, wherein the substance is present as a component of a layer.

12. Cooling tower according to claim 11, wherein the layer is composed of Mo oxide and/or of W oxide or of Mo and Mo oxide or of W and W oxide.

13. Cooling tower according to claim 12, wherein the layer is composed of MoO₃.

14. Cooling tower according to claim 1 to 13, wherein the substance has a particle size according to Fisher of < 5 µm.

15. Cooling tower according to any one of claims 1 to 14, wherein the mass content of the substance in the composite material and/or material combination is 0.1 to 50 % by vol, preferably is 3 to 15 % by vol.

## Revendications

1. Tour de refroidissement contenant un système de refroidissement, moyennant quoi le système de refroidissement présente au moins un encastrement en au moins un matériau composite et / ou au moins un composé de matériaux et une matière qui provoque, en contact avec un support aqueux, la formation de cations d'hydrogène et contient du molybdène et / ou du tungstène.

2. Tour de refroidissement selon la revendication 1, moyennant quoi il s'agit, dans le système de refroidissement, d'un système d'eau de refroidissement.

3. Tour de refroidissement selon la revendication 2, moyennant quoi l'encastrement est un pare-gouttes et / ou une chicane de ruissellement.

4. Tour de refroidissement selon l'une des revendications 1 à 3, moyennant quoi un composant du matériau composite et / ou du composé de matériaux contient une matrice polymère.

5. Tour de refroidissement selon la revendication 4, moyennant quoi la matrice polymère contient du polypropylène.

6. Tour de refroidissement selon les revendications 4 ou 5, moyennant quoi la matière est incorporée dans la matrice polymère.

7. Tour de refroidissement selon l'une des revendications 2 à 6, moyennant quoi la solubilité de la matière dans l'eau de refroidissement est inférieure à 0,1 mol/litre.

8. Tour de refroidissement selon l'une des revendications 1 à 7, moyennant quoi la matière est de l'oxyde de Mo, en particulier du MoO₂ et / ou du MoO₃ ou un oxyde de W, en particulier de l'oxyde bleu de tungstène et / ou du WO₃.

9. Tour de refroidissement selon l'une des revendications 1 à 7, moyennant quoi la substance molybdène est un alliage de molybdène et / ou une combinaison de molybdène, moyennant quoi la surface présente une couche d'oxyde de Mo ou moyennant quoi la substance tungstène est un alliage de tungstène et / ou une combinaison de tungstène, moyennant quoi la surface présente une couche d'oxyde de tungstène.

10. Tour de refroidissement selon la revendication 9, moyennant quoi la combinaison de molybdène est un carbure de molybdène, un nitrure de molybdène, un siliciure de molybdène et / ou un sulfure de molybdène ou moyennant quoi la combinaison de tungstène est un carbure de tungstène, un nitrure de tungstène, un siliciure de tungstène et / ou un sulfure de tungstène.

11. Tour de refroidissement selon l'une des revendications 1 à 10, moyennant quoi la matière est présente en tant que composant d'une couche.

12. Tour de refroidissement selon la revendication 11, moyennant quoi la couche se compose d'un oxyde de Mo et / ou d'un oxyde de W ou de Mo et d'un oxyde de Mo ou de W et d'un oxyde de W.

13. Tour de refroidissement selon la revendication 12, moyennant quoi la couche se compose de MoO₃.

14. Tour de refroidissement selon la revendication 1 à 13, moyennant quoi la matière présente une taille de particule d'après Fischer < 5 µm.

15. Tour de refroidissement selon l'une des revendications 1 à 14, moyennant quoi la teneur en masse de la matière dans le matériau composite et / ou le composé de matériaux est de 0,1 à 50 % en volume, de préférence de 3 à 15 % en volume.
